# EUROPEAN PATENT APPLICATION

(11) **EP 1 811 800 A1**
(43) Date of publication of application: **25.07.2007**
(21) Application number: 06290163.2
(22) Date of filing: 23.01.2006
(51) Int. Cl.: H04Q 7/38

(54) **Method, base station, and communication network supporting high-speed uplink packet access (HSUPA) with soft handover mechanisms**

(71) Applicant: Alcatel Lucent, 75008 Paris (FR)
(72) Inventor: Bakker, Hajo, 71735 Eberdingen (DE); Zeller, Dietrich, 71067 Sindelfingen (DE)
(74) Representative: Kohler Schmid Möbus

(57) **Abstract**

A method of supporting soft / softer handover mechanisms for High-Speed Uplink Packet Access (HSUPA) in a cellular communication network (1) with a plurality of base stations (2.1, 2.2), wherein said handover mechanisms include establishing an additional link to at least one additional network cell from a User Equipment (UE) (3) capable of using HSUPA and linked to a serving network cell (2.1 a) via a first link. The proposed method comprises the steps of:
- upon detection of a soft / softer handover request from the user equipment (3), checking by a serving base station (2.1) of the plurality of base stations if at least a first predefined processing capacity is available at the additional network cell for allowing the requested handover;
- if said first processing capacity is available, controlling of said handover by means of the serving base station (2.1), else
- if only a second predefined processing capacity lower than the first predefined processing capacity is available, sending an information message to the User Equipment (3) from the base station (2.1, 2.2) controlling the additional network cell upon reception of data from the User Equipment (3).

In this way, soft / softer handover and Relative Grant mechanisms are supported in the context of HSUPA.

## Description

### Background of the invention

The invention relates to a method of supporting soft and / or softer handover mechanisms for High-Speed Uplink Packet Access (HSUPA) in a cellular network environment with a plurality of smart base stations (Smart Node-Bs, SNBs), wherein said handover mechanisms include establishing an additional link to at least one additional network cell from a User Equipment (UE) capable of using HSUPA and linked to a serving network cell via a first link.

The present invention further relates to a base station for use in a communication network supporting a HSUPA protocol and to a communication network capable of translating the inventive method into practise.

Furthermore, the present invention relates to a computer program product operable to setup such a base station.

High-Speed Uplink Packet Access (HSUPA) is a data access protocol for mobile telephone networks with extremely high upload speeds up to 5,8 Mbit/s. Specification for HSUPA is still under development. Furthermore, a smart base station (also referred to as "smart Node-B" (SNB)) having functionality of a conventional base station and some additional functionality of a Radio Network Controller (RNC) is to be defined in order to simplify the architecture of communication networks. Such an SNB should be backward compatible and support the transmission of packet switched (PS) data via High-Speed Downlink Packet Access (HSDPA) and HSUPA - in particular with respect to supporting soft / softer handover and Relative Grant (RG) mechanisms.

Soft and softer handover enables a User Equipment (UE) such as a mobile telephone or a PC communication card to maintain continuity and quality of connection while moving from one network cell to another. During a soft or softer handover, the User Equipment momentarily adjusts its power to the base station that requires the smallest amount of transmit power, and the preferred cell may change very rapidly. While during soft handover the User Equipment is connected to multiple cells at different base stations, during a softer handover the User Equipment is connected to multiple cells at a common base station. Currently, Relative Grant scheduling mode has been agreed in 3GPP (3rd Generation Partnership Programme). In "RG mode", the base station performs scheduling and allocates "absolute" or "relative" grants to the User Equipment, respectively. While an absolute grant is used to set an absolute power limit for transmission by the User Equipment, Relative Grants can be used to command the User Equipment to adjust its power relative to an actual value. In addition, a "hold" grant can be used to command the User Equipment to retain a current power limit. While in soft / softer handover, the User Equipment may receive absolute or Relative Grants from a serving base station. However, only Relative Grants can be received from a non-serving base station.

In the context of HSUPA no implementation of said handover mechanisms are known from the prior art.

### Object of the invention

It is the object of the present invention to provide an implementation supporting soft / softer handover and Relative Grant mechanisms in the context of communication networks supporting HSUPA. Preferably, the proposed solution should not require any modification of legacy User Equipment.

### Description of the invention

According to a first aspect of the present invention the object is achieved by providing a method of supporting soft / softer handover mechanisms for High-Speed Uplink Packet Access (HSUPA) in a cellular communication network with a plurality of smart base stations (SBNs), wherein said handover mechanisms include establishing an additional link to at least one additional network cell from a User Equipment (UE) capable of using HSUPA and linked to a serving network cell via a first link, the method comprising the steps of:
- upon detection of a soft / softer handover request from the User Equipment, checking by a serving SNB of the plurality of SNBs if at least a first predefined processing capacity is available at the additional network cell for allowing the requested handover,
- if said first processing capacity is available, controlling of said handover by means of the serving SNB, else
- if only a second predefined processing capacity lower than the first predefined processing capacity is available, sending an information message (NACK) to the UE from the SNB controlling the additional network cell upon reception of data from the UE.

In accordance with a second aspect of the present invention the object is also achieved by providing a base station for use in a communication network supporting a HSUPA protocol, being adapted to, upon detection of a soft / softer handover request from a currently served UE linked to a serving network cell which involves establishing an additional link from the UE to at least one additional network cell:
- determine an available processing capacity in the additional network cell,
- control the handover if at least a first predefined processing capacity is available in the additional network cell for allowing the requested handover.

Furthermore, in accordance with a third aspect of the present invention, the object is achieved by providing a communication network supporting a HSUPA protocol comprising:
- at least one UE capable of using the HSUPA protocol and of requesting a soft / softer handover,
- at least one base station according to said second aspect of the present invention.

In accordance with a fourth aspect of the present invention the object is further achieved by providing a computer programme product, comprising program code sequences operable to set up a base station according to said second aspect of the present invention.

Thus, according to a general idea of the present invention the smart base stations determine whether or not a second link can be established to the User Equipment upon request of a soft handover by the User Equipment.

If neither the first nor the second processing capacity is available, then in a further embodiment the method in accordance with the present invention comprises the additional step of rejecting establishing said additional link by the base station controlling the additional network cell.

To this end and in a further embodiment of the base station in accordance with the present invention the latter is further adapted to, following said request from a User Equipment currently being served by another base station, send an information message (NACK) to the User Equipment upon reception of data from the User Equipment if the first processing capacity is not available.

Furthermore, in yet another embodiment of the base station in accordance with the present invention the latter is further adapted to, following said request from a User Equipment currently being served by another base station, reject establishing said additional link if neither the first nor a second lower processing capacity is available.

In a further embodiment of the method in accordance with the present invention, the method further comprises the step of sending Relative Grant messages at least from the smart base station controlling the additional network cell to the User Equipment. In this way, inter cell interference can be minimised.

In a corresponding embodiment of the base station in accordance with the present invention the latter is further adapted to send Relative Grant messages to the User Equipment.

For to determine whether or not enough resources are available for establishing the requested additional link, in a further embodiment of the method in accordance with the present invention the latter comprises the step of checking a transport capacity between the serving smart base station and the smart base station controlling the additional network cell, if the serving smart base station and the smart base station controlling the additional network cell are distinct entities, i.e. if the serving network cell and the additional network cell are not located in the same base station.

In a corresponding embodiment of the base station in accordance with the present invention the latter is further adapted to check a transport capacity with respect to a data transmission to at least one other base station in the communication network.

For to achieve an improved quality of connection, in a further embodiment of the method in accordance with the present invention, the latter comprises the step of soft combining data received from the User Equipment via different links with the User Equipment at the serving smart base station, if the first processing capacity is available. This means that said soft combining of data is only enabled in case enough processing capacity can be provided for this task.

In corresponding embodiment of the base station in accordance with the present invention the latter is further adapted to soft combine data received from the User Equipment via different links with the User Equipment if the first processing capacity is available.

For to further improve a quality of connection, in yet another embodiment of the method in accordance with the present invention the latter further comprises the step of sending data received from the User Equipment via said additional link from the smart base station controlling the additional network cell to the serving smart base station for selection combining with data received from the User Equipment at the serving smart base station, if the serving smart base station and the smart base station controlling the additional network cell are distinct entities.

In a corresponding embodiment of the base station in accordance with the present invention the latter is further adapted to send data received from the User Equipment via said additional link to another base station currently serving the User Equipment for selection combining with data received from the User Equipment at the other base station.

Further advantages and characteristics of the present invention can be gathered from the following description of preferred embodiments given by way of example only with reference to the enclosed drawings. The features mentioned above as well as below can be used in accordance with the present invention either individually or in conjunction. The embodiments mentioned are not to be understood as an exhaustive enumeration but rather as examples with regard to the underlying concept of the present invention.

### Drawings

- Fig. 1: is a schematic diagram illustrative of a communication network in accordance with the present invention;
- Fig. 2: is a first diagram illustrative of a protocol message flow between various entities of the communication network in accordance with the present invention;
- Fig. 3: is a second diagram illustrative of a protocol message flow between various entities of the communication network in accordance with the present invention;
- Fig. 4: is a schematic block diagram of a first system configuration of the communication network in accordance with the present invention; and
- Fig. 5: is a schematic block diagram of a second system configuration of the communication network in accordance with the present invention.

### Detailed description

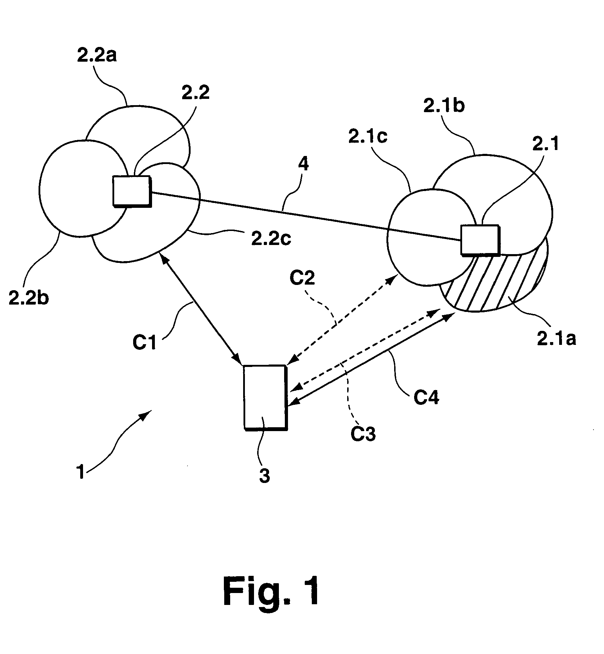

**Fig. 1** shows a schematic illustration of an embodiment of the communication network **1** in accordance with the present invention. The communication network 1 is devised as a radio based communication network and comprises a plurality of base stations **2.1, 2.2**, only two of which are depicted for reason of simplicity. In the communication network 1 in accordance with the present invention, the base stations 2.1, 2.2 are devised as smart base stations and are hereinafter also referred to as smart Node-Bs (SNBs). This means that the base stations 2.1, 2.2 are devised to take over certain functionalities usually provided by a Radio Network Controller (RNC) in conjunction with conventional base stations / Node-Bs. This is in accordance with 3G LTE (3rd Generation Long Term Evolution), which involves definition of an SNB incorporating functionality of a conventional Node-B and some functionality of conventional RNCs in order to simplify overall network architecture.

The communication network 1 of Fig. 1 further comprises at least one User Equipment (UE) **3,** e.g. a mobile telephone or the like, for data communication via respective radio links with the base stations 2.1, 2.2. To this end, each of the base stations 2.1, 2.2 sets up, maintains and controls a number of radio cells **2.1a-c, 2.2a-c** (also referred to as "network cells" or simply "cells"). In the embodiment of Fig. 1, each base station 2.1, 2.2 is associated with three cells 2.1 a-c and 2.2a-c, respectively, which may be distinguishable, e.g., geographically and / or by means of a certain frequency re-use, as will be appreciated by a person skilled in the art. In a communication network 1 of the type depicted in Fig. 1, the User Equipment 3 would typically be present (geographically) inside a given network cell for communication with the associated base station using the physical communication parameters associated with that particular network cell. In contrast to this, in Fig. 1 the User Equipment 3 is shown outside the network cells merely for illustrational purposes. Furthermore, in Fig. 1 data communication between the User Equipment 3 and a given network cell / the controlling base station is depicted by means of double-headed arrows **C1-C4.** The base stations 2.1, 2.2 are interconnected by means of a connection **4.**

Typically, a communication network 1 of the type depicted in Fig. 1 additionally comprises a Radio Network Controller (RNC) in operative connection with a plurality of base stations for providing access to a core network, as known to a person skilled in the art. However, for illustrational simplicity the last two network elements are not depicted in Fig. 1. In a conventional communication network, the RNC has the overall control of a particular set of cells and their associated base stations. In the communication network 1 in accordance with the present invention, some of the control functionalities of the RNC are taken over by the smart base stations 2.1, 2.2, as will be explained in detail farther below.

In the communication network 1 shown, all entities, i.e. base stations 2.1, 2.2 and User Equipment 3, are adapted to support High-Speed Uplink Packet Access (HSUPA), a data access protocol with high upload speeds up to 5,8 Mbit/s. HSUPA is considered 3.75G or even 4G and was still under development by July 2005. Its specifications will be included in UMTS Release 6 and will be published on www.3GPP.org.

As a starting point for the following detailed description of the invention it is assumed that a HSUPA connection C3 or C4 between the User Equipment 3 and the rest of the communication network 1 has been established, i.e., in one so-called serving cell, e.g. cell 2.1 a, of one of the base stations 2.1, 2.2 sufficient resources are available and have been allocated. In Fig. 1, the serving cell 2.1 a is depicted by means of a hashed area. Accordingly, data transfer on said HSUPA connection is symbolised by means of dashed arrow C3 and solid arrow C4, as will be detailed farther down. In the following, the controlling base station 2.1 of the serving cell 2.1 a is referred to as "serving base station" or "serving SNB".

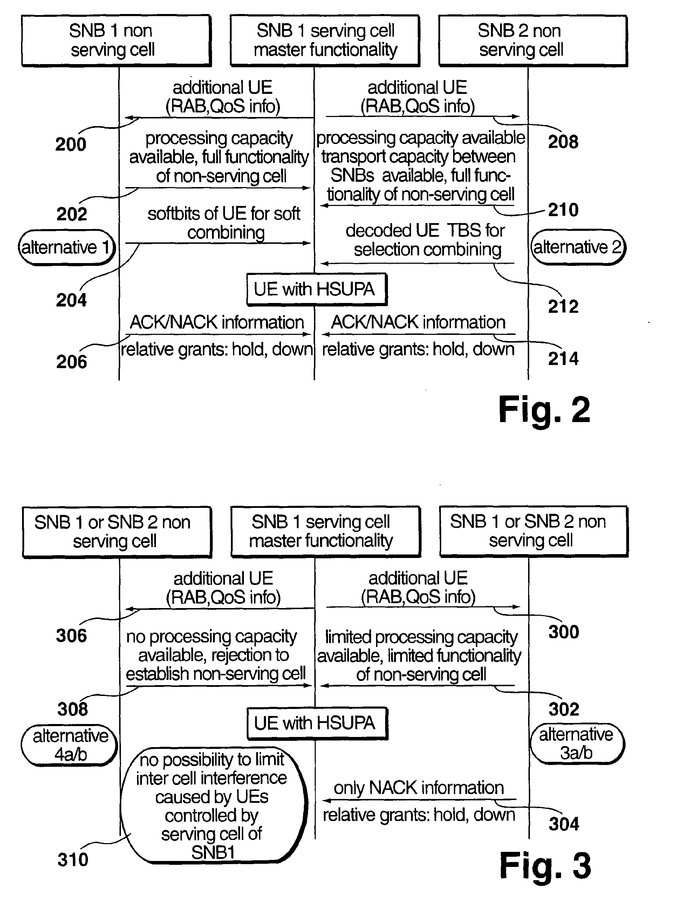

In accordance with the present invention, a method of supporting HSUPA soft and / or softer (soft / softer) handover in an SNB environment is proposed. With soft handover functionality the User Equipment can communicate simultaneously with two or more cells in two or more base stations, e.g. with cell 2.2c in base station 2.2 and cell 2.1 a in base station 2.1 (solid arrows C1 and C4) - or with cell 2.1 c and with cell 2.1 a in base station 2.1 (dashed arrows C2 and C3). This flexibility in keeping the connection open to more than one base station results in fewer lost calls, which is very important to a network operator. To achieve a good system performance, in particular with a frequency re-use of 1 and power control, soft and softer handover is required. Soft and softer handover enables the User Equipment to maintain the continuity and quality of the connection while moving from one cell to another. During soft or softer handover, the User Equipment will momentarily adjust its power to the base station that requires the smallest amount of transmit power, and a preferred cell may change very rapidly. As stated before, the difference between soft and softer handover is that during soft handover, the User Equipment 3 is connected to multiple cells at different base stations, e.g. cells 2.2c and 2.1a (solid arrows C1, C4), while during softer handover, the User Equipment 3 is connected to multiple cells at the same base station, e.g. cells 2.1 a, 2.1c (dashed arrows C2, C3). Making use of the communication network 1 described above, an operation of preferred embodiments of the method in accordance with the present invention will now be described with reference to appended Figs. 2 to 5.

If the User Equipment 3 of Fig. 1 indicates - based on User Equipment measurements - that in addition to the existing connection C3, C4 with the serving cell 2.1 a a second / additional cell could be added as a non-serving cell, owing to its so-called "master functionality" the SNB 2.1 decides whether or not a second radio link to the User Equipment 3 shall be established. In accordance with the present invention, four different alternatives can be considered. The corresponding message exchange is depicted in Figs. 2 and 3.

**Fig. 2** shows on the left hand side the message exchange in case said second cell, e.g. cell 2.1 c of Fig. 1, is located / maintained in the same SNB, i.e. SNB 2.1. In the illustration of Fig. 2 the serving base station (SNB) 2.1 is denoted "SNB1". At **200** according to said master functionality the SNB 2.1 of the serving cell 2.1 a (Fig. 1) informs the SNB 2.1 of a potential non-serving cell 2.1 c (Fig. 1) determined by the User Equipment 3 that a User Equipment has requested establishing an additional communication link. A corresponding internal message preferably comprises information concerning the Radio Access Bearer (RAB) and a required Quality of Service (QoS). Subsequently, at **202** said non-serving SNB2.1 responds with a message comprising information as to the available processing capacity in said potential non-serving cell 2.1 c. Based on said information provided by internal SNB communication within base station SNB1 of Fig. 2, the latter decides whether or not sufficient processing capacity for the admission of the HSUPA User Equipment in a second cell, i.e. said non-serving cell 2.1 c, is available. In this context and in accordance with an embodiment of the present invention, a check is performed as to whether or not at least a first predefined processing capacity is available in said potential second cell. If the check succeeds, then in addition to communication C3 a HSUPA communication according to the 3GPP standard is possible as indicated by means of dashed arrow C2 in Fig. 1. Subsequently, at **204** the additional non-serving cell of SNB1 provides softbits received from the User Equipment 3 via connection C2 (Fig. 1) to the serving cell of base station SNB1 for soft combining. Furthermore, as indicated at 206 in Fig. 2, corresponding ACK / NACK information in conjunction with Relative Grants (RG) is sent from the added non-serving cell to the HSUPA User Equipment 3. In accordance with HSUPA specifications, since SNB1 in conjunction with the non-serving cell is not the main serving Node-B said Relative Grants comprise only "hold" and "down" commands and no "up" commands.

Since the cells 2.1 a, 2.1 c involved in said first alternative are associated with one common base station 2.1 (SNB1), the above-described mechanism corresponds to a softer handover mechanism, as defined farther up.

Referring now to the second alternative depicted on the right hand side of Fig. 2, again at **208** an information message is sent from base station SNB1 to the base station SNB2 of a potential non-serving cell. However, in the case of the present second alternative, the potential non-serving / second cell is associated with another base station. Referring back to Fig. 1, this could, e.g., be cell 2.2c located in base station 2.2. In this case, owing to its master functionality SNB1 has to decide from information provided over an external SNB-to-SNB communication at **210**, whether or not sufficient processing capacity is available for the admission of the HSUPA User Equipment in said potential second cell, i.e. a non-serving cell. Only in case sufficient processing capacity is available, said second cell will be able to provide the full functionality of a non-serving cell, as will be detailed below. Since in the case of the present second alternative the serving and the non-serving cells are located in different base station, in addition to the checks performed in connection with the above-described first alternative a transport capacity between the two SNBs (SNB1, SNB2) has to be checked with respect to the transmission of HSUPA transport blocks (TBs) from SNB2 to SNB1 at 210. If these checks do not fail, HSUPA transport blocks successfully decoded in SNB2 are transported over the connection 4 (Fig. 1) to SNB1 at **212**, i.e. the smart Node-B controlling the serving cell, and a soft combining communication (selection combining) takes place at SNB1. Furthermore, at **214** ACK / NACK information and Relative Grants ("hold", "down") are sent from SNB2 of the additional non-serving cell to the HSUPA User Equipment. In this way, a HSUPA communication according to the 3GPP standard is possible.

In terms of the above-given definition, said second alternative corresponds to a soft handover mechanism, since the two cells involved, e.g. cells 2.1 a and 2.2c of Fig. 1, are associated with different base stations, i.e. distinct entities (cf. solid arrows C1, C4).

The right hand side of **Fig. 3** illustrates two further alternatives referred to as "alternative 3a" and "alternative 3b", according to which only limited processing capacity, e.g. in terms of a second predefined capacity lower than the first predefined processing capacity, is available in the potential non-serving cell. In Fig. 3, no explicit difference is made between situations in which the potential non-serving cell is located in the same or in different base station with respect to the master functionality of the serving cell located in base station SNB1. The message sent at **300** from SNB1 to the base station (i.e., either SNB1 or SNB2) of the potential non-serving cell corresponds to messages 200, 208 of Fig. 2. At **302**, the base station controlling the potential non-serving cell sends information to the base station controlling the serving cell which indicates that only limited processing capacity is available, such that only limited functionality can be provided by the non-serving cell. In this context, alternative 3a refers to the case in which the potential second cell is located in the same SNB as the serving cell master functionality such that the messages sent at 300 and 302 are sent via internal SNB communication. If only limited processing power is available, the SNB internal soft combining as detailed above will not be used. In this case, the second cell will still behave as a non-serving cell towards the HSUPA User Equipment but will respond to each HSUPA transport block received from the User Equipment with a NACK message as a negative response at **304**. However, within the scope of the above-described alternative 3a the transmission of Relative Grants (RG) will still be performed as in the case of alternatives 1 and 2 described above with reference to Fig. 2 in order to limit inter cell interference. In this way, a HSUPA communication according to the 3GPP standard is possible.

In contrast to this, alternative 3b refers to a situation in which the (potential) second cell is located in another SNB, i.e. an entity distinct from the SNB comprising the serving cell / master functionality. In this case, the decision as to whether or not sufficient processing capacity for the admission of the HSUPA User Equipment in a second cell (non-serving cell) is available has to be performed based on information transmitted over an external SNB-to-SNB communication at 300, 302. In the present case of only limited processing power being available, the second SNB (SNB2) will not decode HSUPA transport blocks received from the User Equipment (cf. Fig. 2) but will respond to each received HSUPA transport block with a NACK message as a negative response at 304. In addition, at 304 the transmission of Relative Grants will be performed in order to limit the inter cell interference, as described in detail above. In this way, a HSUPA communication according to the 3GPP standard is possible.

The left hand side of Fig. 3 illustrates alternatives 4a and 4b, both referring to situations in which no processing capacity is available in the potential second cell, i.e. only a processing capacity lower than the first and second predefined processing capacities. As before in case of alternatives 3a, 3b, alternatives 4a and 4b differ only in that alternative 4a refers to a situation in which the second cell is located in the same SNB as the serving cell, whereas alternative 4b is concerned with a case in which the second cell is located in a different SNB.

The message sent at **306** from SNB1 to either SNB1 (alternative 4a) or SNB2 (alternative 4b) corresponds to message 300 (see above). From the internal / external communication at **308** the master functionality of SNB1 determines that not enough processing capacity is available to establish the requested non-serving cell. Accordingly, in the case of alternative 4a no additional non-serving cell is setup for the HSUPA User Equipment. Furthermore, there is no transmission of Relative Grants at **310** to limit the inter cell interference, such that a performance degradation will occur. However, a HSUPA communication according to the 3GPP standard is still possible.

In the case of alternative 4b the second SNB (SNB2) explicitely rejects the request at 308. As before in the case of alternative 4a there is no transmission of a Relative Grants at 310, such that a performance degradation will occur. Still, a HSUPA communication according to the 3GPP standard is possible even in case of alternative 4b.

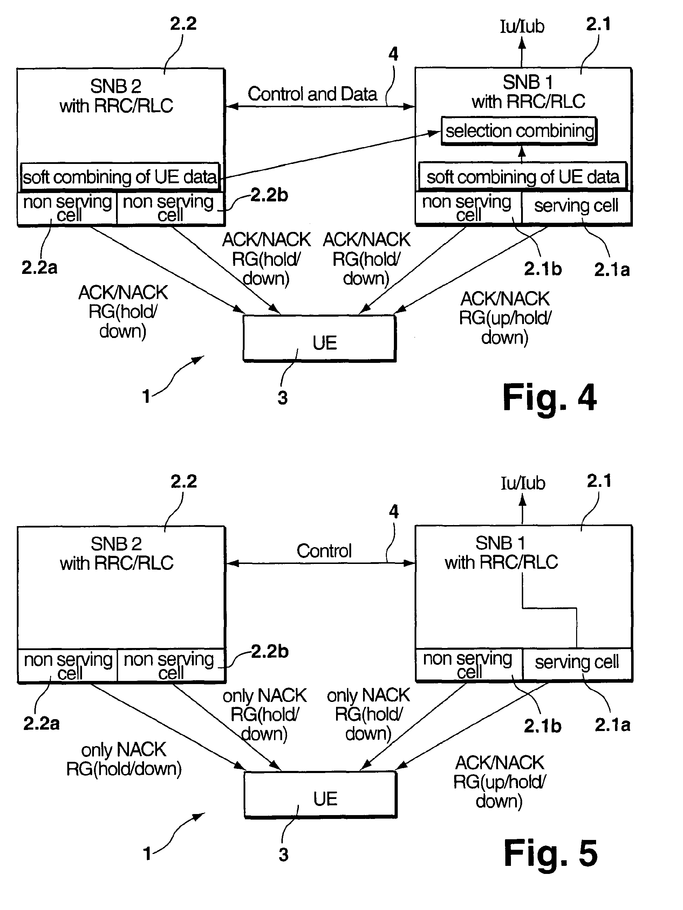

The following Figs. 4 and 5 show system configurations with respect to the above-described alternatives 1 / 2 (Fig. 2) and 3a / 3b (Fig. 3), respectively. In Figs. 4 and 5 elements already described in connection with Fig. 1 have been assigned by same reference numerals.

**Fig. 4** shows two base stations 2.1, 2.2 which exchange control messages and data over connection 4. Each of the base stations 2.1, 2.2 comprises two serving cells 2.1 a, b and 2.2a, b, respectively. Cell 2.1 a functions as a serving cell with master functionality. Both base stations 2.1, 2.2 are adapted to perform functions defined by radio link control (RLC) protocol and radio resource control (RRC) protocol, as known to a person skilled in the art. Further depicted in Fig. 4 is a User Equipment 3 in (potential) operative connection with multiple cells, i.e. serving cell 2.1a and non-serving cell 2.1 b of base station 2.1 and non-serving cells 2.2a, b of base station 2.2. As there is sufficient processing capacity, each one of the base station provides soft combining of UE data, which are selection combined in the serving SNB 2.1. As further depicted in Fig. 4, the serving SNB 2.1 provides lu / lub interfaces to the RNC or the core network, respectively, as known to a person skilled in the art. As indicated in Fig. 4, the base stations 2.1, 2.2 associated with the various serving / non-serving cells sent ACK / NACK messages and Relative Grants (RG) to the User Equipment 3.

In contrast, **Fig. 5** illustrates the alternatives 3a / 3b (Fig. 3) according to which only insufficient processing power is available in either base station 2.1 or base station 2.2. Accordingly, as described in detail above with reference to Fig. 3, soft combining of UE data and selection combining in the serving base station 2.1 is disabled. The various serving / non-serving cells only transmit NACK messages and Relative Grants to the User Equipment 3.

As will be appreciated by those skilled in the art, the base stations can easily be adapted to performing the above-described tasks and functions by providing them with a computer program product comprising suitable program code sequences, which are to be executed by means of a data processing unit typically included in any conventional base station - either by direct input, via a computer-readable medium or over a network connection.

The present invention thus provides support of HSUPA in a smart Node-B context. Advantageously, there is no need to modify the legacy User Equipment.

## Claims

1. A method of supporting soft / softer handover mechanisms for High-Speed Uplink Packet Access [HSUPA] in a cellular communication network (1) with a plurality of base stations (SNBs; 2.1, 2.2), wherein said handover mechanisms include establishing an additional link (C1, C2) to at least one additional network cell (2.1 c, 2.2c) from a User Equipment [UE] (3) capable of using HSUPA and linked to a serving network cell (2.1 a) via a first link (C3, C4), the method comprising the steps of:
- upon detection of a soft / softer handover request from the User Equipment (3), checking by a serving base station (2.1) of the plurality of base stations if at least a first predefined processing capacity is available at the additional network cell (2.1 c, 2.2c) for allowing the requested handover;
- if said first processing capacity is available, controlling of said handover by means of the serving base station (2.1), else
- if only a second predefined processing capacity lower than the first predefined processing capacity is available, sending an information message (NACK; 304) to the User Equipment (3) from the base station (2.1, 2.2) controlling the additional network cell (2.1 c, 2.2c) upon reception of data from the User Equipment (3).

2. The method of claim 1, further comprising the step of rejecting establishing said additional link (C1) by the base station (2.2) controlling the additional network cell (2.2c) if the first and second processing capacities are not available.

3. The method of claim 1, further comprising the step of sending (206, 214, 304) relative grant messages at least from the base station (2.1, 2.2) controlling the additional network cell (2.1 c, 2.2c) to the User Equipment (3).

4. The method of claim 1, further comprising the step of checking (202, 210, 302, 308) a transport capacity between the serving base station (2.1) and the base station (2.2) controlling the additional network cell (2.2c), if the serving base station and the base station controlling the additional network cell are distinct entities.

5. The method of claim 1, further comprising the step of soft combining data received from the User Equipment (3) via different links (C2, C3, C4) with the User Equipment (3) at the serving base station (2.1), if the first processing capacity is available.

6. The method of claim 1 further comprising the step of sending (204) data received from the User Equipment (3) via said additional link (C1) from the base station (2.2) controlling the additional cell (2.2c) to the serving base station (2.1) for selection combining with data received from the User Equipment (3) via different links (C2 - C4) with the User Equipment (3) at the serving base station (2.1), if the serving base station (2.1) and the base station (2.2) controlling the additional network cell (2.2c) are distinct entities.

7. A base station (2.1, 2.2) for use in a communication network (1) supporting a HSUPA protocol, being adapted to, upon detection of a soft / softer handover request from a currently served User Equipment (3) linked to a serving network cell (2.1 a) which involves establishing an additional link (C1, C2) from the User Equipment (3) to at least one additional network cell (2.1 c, 2.2c):
- determine an available processing capacity in the additional network cell (2.1 c, 2.2c),
- control the handover if at least first predefined processing capacity is available in the additional network cell (2.1 c, 2.2c) for allowing the requested handover.

8. The base station of claim 7, being further adapted to, following said request from a User Equipment (3) currently being served by another base station (2.1), send an information message (NACK, 304) to the User Equipment (3) upon reception of data from the User Equipment if the first processing capacity is not available.

9. The base station of claim 7, being further adapted to, following said request from a User Equipment (3) currently being served by another base station (2.1), reject establishing said additional link (C1, C2) if neither the first nor a second lower processing capacity is available.

10. The base station of claim 7, being further adapted to send Relative Grant messages to the User Equipment (3).

11. The base station of claim 7, being further adapted to check a transport capacity with respect to a data transmission to at least one other base station (2.1) in the communication network (1).

12. The base station of claim 7, being further adapted to soft combine a data received from the User Equipment (3) via different links (C2 - C4) with the User Equipment (3) if the first processing capacity is available.

13. The base station of claim 7, being further adapted to send data received from the User Equipment (3) via said additional link (C1) to another base station (2.1) currently serving the User Equipment (3) for selection combining with data received from the User Equipment (3) at the other base station (2.1).

14. A communication network (1) supporting a HSUPA protocol, comprising:
- at least one User Equipment (3) capable of using of the HSUPA protocol and of requesting a soft / softer handover,
- at least one base station (2.1, 2.2) according to claim 7.

15. A computer program product, comprising program code sequences operable to set up a base station (2.1, 2.2) according to claim 7.
